# EUROPÄISCHE PATENTSCHRIFT

(11) **EP 2 275 010 B1**
(45) Veröffentlichungstag und Bekanntmachung des Hinweises auf die Patenterteilung: **08.02.2012**
(21) Anmeldenummer: 10007207.3
(22) Anmeldetag: 13.07.2010
(51) Int. Cl.: A47J 31/44

(54) **Vorrichtung und Verfahren zum Aufschäumen eines flüssigen Lebensmittels, insbesondere von Milch**
Device and method for foaming liquid food, in particular milk
Dispositif et procédé de moussage d'un aliment liquide, notamment du lait

(30) Priorität: 15.07.2009 DE 102009033506
(43) Veröffentlichungstag der Anmeldung: 19.01.2011
(73) Patentinhaber: FRANKE Kaffeemaschinen AG, 4663 Aarburg (CH)
(72) Erfinder:
(74) Vertreter: Lemcke, Brommer & Partner

(56) Entgegenhaltungen:
- EP-A1- 1 312 292
- EP-A1- 1 785 074
- WO-A1-2008/083941
- DE-A1- 4 445 436
- DE-U1-202008 016 400
- US-A1- 2005 223 911

## Beschreibung

Die Erfindung betrifft eine Vorrichtung und ein Verfahren zum Aufschäumen eines flüssigen Lebensmittels, insbesondere von Milch, gemäß Anspruch 1 und 13.

Zum Aufschäumen eines flüssigen Lebensmittels sind Vorrichtungen bekannt, bei denen in einer Aufschäumkammer das flüssige Lebensmittel, Dampf und Luft vermischt werden, so dass das flüssige Lebensmittel aufgeschäumt wird und über einen Auslass ausgegeben werden kann.

Insbesondere bei Kaffeemaschinen ist es beispielsweise zur Zubereitung von Cappuccino bekannt, mit solchen Vorrichtungen Milch aufzuschäumen. Typischer Weise wird hierbei die Luft und/oder die Milch mittels des Venturieffekts aufgrund der Dampfströmung angesaugt.

Beispielsweise ist in EP 00 243 326 A2 eine Vorrichtung zum Aufschäumen von Milch beschrieben, bei der eine Milch-, eine Dampf- und eine Luftzuleitung mit einer Aufschäumkammer verbunden sind. Milch und Luft werden mittels des Venturieffektes aufgrund der Dampfströmung angesaugt. Die Vorrichtung weist handbetätigbare Drosselventile zur Regulierung des Luft- und des Milchflusses auf.

EP 1 785 074 A1 offenbart eine Vorrichtung zum Aufschäumen und Erhitzen von Milch, mit einer Aufschäumkammer, in welche Milch aus einem Behälter mittels einer Pumpe, Luft und Dampf aus einem Dampfgenerator zuführbar ist.

Die Luftzuführleitung mündet in eine Dampfzuführleitung, wobei an der Mündung ein Ventil zum Unterbinden der Luftzufuhr angeordnet ist.

Aufgrund der großen Beliebtheit von Kaffeemischgetränken, insbesondere von Kaffee-Milch-Mischgetränken finden Vorrichtungen zum Aufschäumen von flüssigen Lebensmitteln eine immer breitere Verwendung. Insbesondere in der Gastronomie bestehen daher hohe Anforderungen an die Qualität des erzeugten Schaumes. Beispielsweise soll Milchschaum für Cappuccino eine gleichmäßige Feinporigkeit und damit Dauerhaftigkeit aufweisen. Aufgrund der unterschiedlichen gewünschten Schaumarten und der unterschiedlichen Ausgangsmaterialen, wie beispielsweise Milch mit unterschiedlicher Temperatur oder Fettgehalt sowie andere flüssige Lebensmittel mit unterschiedlichen Viskositäten erweist sich die Herstellung der jeweils gewünschten Schaumarten als schwierig.

Der Erfindung liegt somit die Aufgabe zu Grunde, eine Vorrichtung zum Aufschäumen eines flüssigen Lebensmittels zu schaffen, die für den Benutzer das Aufschäumen des flüssigen Lebensmittels zur Herstellung einer gewünschten Schaumkonsistenz vereinfacht, insbesondere hinsichtlich verschiedener gemischter Schaumkonsistenzen und/oder verschiedener Ausgangsparameter des flüssigen Lebensmittels, wie beispielsweise Temperatur, Fettgehalt oder Viskosität.

Gelöst ist diese Aufgabe durch eine Vorrichtung gemäß Anspruch 1 sowie ein Verfahren gemäß Anspruch 13. Vorteilhafte Ausgestaltungen der Vorrichtung finden sich in den Ansprüchen 2 bis 12 und des erfindungsgemäßen Verfahrens in den Ansprüchen 14 bis 17.

Die erfindungsgemäße Vorrichtung zum Aufschäumen eines flüssigen Lebensmittels, insbesondere von Milch, umfasst somit eine Aufschäumkammer, eine Lebensmittelzuleitung, eine Dampfzuleitung und eine Luftzuleitung. Lebensmittel-, Dampf- und Luftzuleitung sind fluidleitend mit der Aufschäumkammer verbunden. Hierbei liegt es im Rahmen der Erfindung, dass eine oder mehrere der genannten Zuleitungen über weitere Zuleitungen mit der Aufschäumkammer verbunden sind.

Wesentlich ist, dass die Vorrichtung eine Steuereinheit und die Luftzuleitung ein mittels der Steuereinheit steuerbares Luftventil umfasst. Das Luftventil ist ein intermittierendes Luftventil, das heißt, dass mittels der Steuereinheit wahlweise mindestens ein Zustand mit hohem Luftdurchfluss und ein Zustand mit dem gegenüber geringerem Luftdurchfluss und/oder mit keinem Luftdurchfluss vorgebbar ist. Steuereinheit und Luftventil sind derart zusammenwirkend ausgestaltet, dass der mittlere Luftdurchfluss des Luftventils durch wiederholtes Umschalten zwischen den mindestens zwei Zuständen des Luftventils steuerbar ist.

Die erfindungsgemäße Vorrichtung weist somit zum einen den Unterschied zu der vorbekannten Vorrichtung auf, dass mittels einer Steuereinheit ein Luftventil in der Luftzuleitung steuerbar ist. Hiermit kann somit automatisch der Luftzufluss gesteuert werden, so dass beispielsweise eine Steuerung abhängig von dem Ausgangsprodukt und/oder der Temperatur oder anderen Parametern des Ausgangsproduktes und/oder abhängig von der gewünschten Art und Konsistenz des herzustellenden Schaumes in einfacher Weise durch die Steuereinheit vorgebbar ist.

Zum Anderen unterscheidet sich die erfindungsgemäße Vorrichtung dadurch, dass der Luftdurchfluss des Luftventils durch wiederholtes Umschalten zwischen mindestens zwei Zuständen des Luftventils gesteuert wird. Es erfolgt somit keine Steuerung des Luftflusses durch ein Drosselventil, statt dessen wird zwischen mindestens zwei Zuständen des Luftventils mit unterschiedlichem Luftdurchfluss wiederholt umgeschaltet, so dass sich im Mittel der gewünschte Luftdurchfluss ergibt.

Untersuchungen der Anmelderin haben ergeben, dass insbesondere die vorgenannte Art der Steuerung des Luftdurchflusses eine gegenüber der Verwendung von Drosselventilen wesentlich exaktere und einfacher realisierbare hochgenaue Steuerung des gewünschten Luftdurchflusses ermöglicht. Darüber hinaus hat die "Taktung" des Luftflusses durch das wiederholte Umschalten zwischen den mindestens zwei Zuständen des Luftventils einen positiven Effekt auf die Schaumentwicklung in der Aufschäumkammer.

Vorzugsweise weist das Luftventil zwei Zustände auf, einen im Wesentlichen geschlossenen und einen geöffneten Zustand. Vorzugsweise ist der erstgenannte Zustand ein vollständig geschlossener Zustand, das heißt, bei dem kein Luftdurchfluss durch das Luftventil erfolgt. Bauartbedingt oder aufgrund der Schaltzeiten kann jedoch auch bei "geschlossenem" Zustand ein geringfügiger Luftdurchfluss erfolgen. Der mittlere Luftdurchfluss des Luftventils wird hierbei durch wiederholtes Umschalten zwischen geschlossenem und geöffnetem Zustand gesteuert. Insbesondere ist die Verwendung von Magnetventilen vorteilhaft, denn solche Ventile sind bereits in unterschiedlichen Ausführungsformen erhältlich und ermöglichen hohe Schaltfrequenzen zwischen geschlossenem und offenem Zustand.

In einer vorteilhaften Ausgestaltung sind Steuereinheit und Luftventil derart zusammenwirkend ausgestaltet, dass der mittlere Luftdurchfluss des Luftventils steuerbar ist durch Vorgabe einer Umschaltfrequenz, mit der zwischen den mindestens zwei Zuständen des Luftventils umgeschaltet wird und/oder durch Vorgabe eines Tastverhältnisses zwischen den mindestens zwei Zuständen. Das Tastverhältnis beschreibt das Zeitverhältnis, in dem nach wiederholtem Umschalten ein Zustand des Luftventils zu den anderen Zuständen steht. Bei lediglich zwei Schaltzuständen wird das Tastverhältnis üblicherweise in einer Prozentangabe DC (duty cycle) angegeben. Ein Tastverhältnis von 5 % DC bedeutet somit bei einem Luftventil mit einem offenen und einem geschlossenen Zustand, dass im Mittel für 5 % der Zeitdauer das Luftventil geöffnet ist und für 95 % der Zeitdauer das Luftventil geschlossen ist.

Untersuchungen der Anmelderin haben ergeben, dass insbesondere durch Vorgabe des Tastverhältnisses eine exakte Vorgabe unterschiedlicher Schaumkonsistenzen, insbesondere unterschiedlicher Schaumvolumina bei gleichem Gesamtgewicht des ausgegebenen Lebensmittels erzielbar sind. Mit der erfindungsgemäßen Vorrichtung kann somit über Vorgabe des Tastverhältnisses durch die Steuereinheit die Konsistenz des erzeugten Schaumes, insbesondere die mittlere Größe der Schaumporen in einfacher und genau reproduzierbarer Weise vorgegeben werden.

Untersuchungen der Anmelderin haben ergeben, dass vorzugsweise Luftventil und Steuereinheit derart ausgeführt sind, dass mittels der Steuereinheit eine Umschaltfrequenz im Bereich von 1 Hz bis 50 Hz, vorzugsweise im Bereich von 1 Hz bis 20 Hz, im weiteren vorzugsweise im Bereich von 5 bis 15 Hz, insbesondere eine Frequenz von etwa 10 Hz vorgebbar ist. Denn die typischen Ventile, insbesondere Magnetventile, zeigen bei den angegebenen Frequenzbereichen die besten Schaumergebnisse, insbesondere ist somit ein Betreiben eines Magnetventils bei einer Frequenz von etwa 10 Hz vorteilhaft.

Wie zuvor erwähnt, ist insbesondere die Steuerung einer gewünschten Schaumkonsistenz durch Vorgabe des Tastverhältnisses vorteilhaft. Untersuchungen der Anmelderin haben ergeben, das vorzugsweise Luftventil und Steuereinheit derart ausgeführt sind, das mittels der Steuereinheit ein Tastverhältnis zwischen geöffnetem und geschlossenem Zustand des Luftventils im Bereich von DC 2 % bis DC 80 %, vorzugsweise im Bereich von DC 5 % bis DC 60 % vorgebbar ist. Durch die vorgenannten Bereiche ergibt sich eine Optimierung des vorgegebenen Wertebereiches für das Tastverhältnis und der Änderung der Schaumkonsistenz, insbesondere des Schaumvolumens in Abhängigkeit der Änderung des Tastverhältnisses.

Die Luftzuführung erfolgt vorzugsweise mittels des Venturieffektes. Hierzu ist die Luftzuleitung vorzugsweise derart ausgeführt und/oder angeordnet, dass mittels des Venturieffektes auch Luft zuführbar ist. Hierbei liegt es Rahmen der Erfindung, dass der Venturieffekt aufgrund der Dampfströmung und/oder aufgrund der Lebensmittelströmung und/oder der Strömung eines Gemisches, welches Dampf- und Lebensmittel enthält, entsteht.

Ebenso liegt die aktive Luftzuführung, beispielsweise mittels einer Pumpe, im Rahmen der Erfindung. Die passive Luftzuführung mittels des Venturieffektes weist jedoch den Vorteil auf, dass keine zusätzlichen Komponenten zur Luftzuführung notwendig sind.

Mittels der erfindungsgemäßen Vorrichtung sind somit einerseits unterschiedliche Schaumkonsistenzen und andererseits vorgegebene Schaumkonsistenzen für unterschiedliche Ausgangsmedien mit unterschiedlichen Temperaturen und/oder Viskositäten oder sonstigen Parametern erzielbar.

Vorzugsweise ist die Steuereinheit daher programmierbar ausgestaltet, so dass zu verschiedenen Getränkeprodukten jeweils Parameter für die Schaumerzeugung in der Steuereinheit speicherbar und/oder werkseitig unabänderlich vorgebbar sind. Diese Parameter umfassen vorzugsweise einen oder mehrere Parameter aus der Gruppe Umschaltfrequenz, Tastverhältnis, Aufschäumdauer, Dampfmenge, Schaummenge und/oder zugemischte Kaffeemenge sowie Ablauf der Getränkezubereitung, d.h. einen oder mehrere Zeitpunkte und/oder Zeitdauern der Zugabe des Kaffees und einen oder mehrere Zeitpunkte und/oder Zeitdauern der Zugabe des Schaums. Hierdurch ist für unterschiedliche Getränkeprodukte der vollautomatische Ablauf deren Herstellung vorgebbar, beispielsweise Reihenfolge der Zugabe von Kaffee und Schaum, die jeweiligen Mengenverhältnisse sowie der Parameter zur Schaumerzeugung. Vorzugsweise ist die Steuereinheit daher zusätzlich mit einer Vorrichtung zur Erzeugung von Kaffee verbunden, so dass die Erzeugung und/oder Ausgabe des Kaffees ebenfalls mittels der Steuereinheit steuerbar ist.

Vorteilhafterweise umfasst die Steuereinheit somit eine Speichereinheit zur Speicherung mindestens eines Aufschäummodus, wobei der Aufschäummodus eine Umschaltfrequenz und/oder ein Tastverhältnis umfasst. Durch Vorgabe eines Aufschäummodus ist somit aufgrund der exakten Steuerung der Luftzufuhr eine gleich bleibende Schaumkonsistenz gewährleistet. Weiterhin ist bei Speicherung mehrerer Aufschäummodi eine für den Benutzer besonders einfache Herstellung unterschiedlicher Schaumkonsistenzen und/oder Verwendung unterschiedlicher flüssiger Lebensmittel bzw. flüssiger Lebensmittel mit unterschiedlichen Parametern möglich. Vorzugsweise umfasst die Vorrichtung daher eine Eingabeeinheit, mittels derer der Benutzer einen vorgegebenen Aufschäummodus auswählt, so dass die Steuereinheit die Vorrichtung mit den zu diesem Aufschäummodus gespeicherten Parametern steuert. Alternativ oder zusätzlich ist es vorteilhaft, dass die Steuereinheit mit mindestens einem Detektor verbunden ist, beispielsweise zur Messung der Temperatur und/oder des Fettgehalts des aufzuschäumenden flüssigen Lebensmittels. Abhängig von den Messdaten des Detektors erfolgt in der Steuereinheit eine Zuordnung zu einem entsprechendem Aufschäummodus oder einer Gruppe entsprechender Aufschäummodi, so dass unabhängig von dem Benutzer und unabhängig von beispielsweise Temperatur und/oder Fettgehalt des flüssigen Lebensmittels stets ein Schaum mit der gewünschten Konsistenz erzeugt wird. Ebenso liegt es im Rahmen der Erfindung, dass Parameter des flüssigen Lebensmittels, wie beispielsweise Temperatur, Fettgehalt und der Viskosität manuell durch den Benutzer über eine Bedieneinheit eingegeben werden und die Steuereinheit einen entsprechenden Aufschäummodus oder eine Gruppe entsprechender Aufschäummodi auswählt.

Bei Zuordnung von Parametern zu einer Gruppe von Aufschäummodi erfolgt die Auswahl des anzuwendenden Aufschäummodus aus dieser Gruppe vorzugsweise durch den Benutzer mittels einer Bedieneinheit.

Die Vorgabe der Aufschäummodi erfolgt vorzugsweise werksseitig, ebenso liegt jedoch auch die Möglichkeit, dass der Benutzer eigene Aufschäummodi abspeichert oder bestehende Aufschäummodi abändert, im Rahmen der Erfindung.

Durch die Steuerung des Luftdurchflusses mittels einer Steuereinheit und insbesondere die hochgenaue Steuerung bei der erfindungsgemäßen Vorrichtung ist es weiterhin möglich, während des Aufschäumvorgangs in kontrollierter Weise die Konsistenz des Schaums zu verändern. So kann beispielsweise ein Schaum mit sich kontinuierlich ändernder Konsistenz, insbesondere der mittleren Größe der Schaumporen und/oder automatisch ein Schichtsystem aus Schaumschichten mit unterschiedlicher Konsistenz, insbesondere unterschiedlicher mittlerer Größe der Schaumporen, erzeugt werden.

Vorzugsweise weist daher mindestens ein Aufschäummodus zwei unterschiedliche Werte für die Umschaltfrequenz und/oder das Tastverhältnis auf, wobei jedem Wertepaar eine Zeitdauer zu dessen Anwendung zugeordnet ist. Vorzugsweise ist bei einem Aufschäummodus eine konstante Umschaltfrequenz vorgegeben und mehrere, sich nach vorgegebenen Zeitdauern stufenartig oder kontinuierlich verändernde Tastverhältnisse. Hierdurch ist die automatische Erzeugung von optisch und geschmacklich interessanten Schaumschichtsystemen möglich.

Es liegt im Rahmen der Erfindung, dass bei der erfindungsgemäßen Vorrichtung das flüssige Lebensmittel in vorbekannter Weise mittels des Venturieffektes angesaugt wird. Vorteilhafterweise umfasst die erfindungsgemäße Vorrichtung jedoch eine Pumpe zum Fördern des flüssigen Lebensmittels, welche Druckseitig fluidleitend mit der Lebensmittelleitung verbunden ist. Wie bereits erwähnt, ergaben Untersuchungen der Anmelderin, dass zur Erzeugung einer gewünschten Schaumkonsistenz eine exakte Vorgabe der Parameter des Aufschäumvorgangs notwendig ist. Wird das flüssige Lebensmittel mittels einer Pumpe zugeführt, so ist neben der exakten Vorgabe des Luftdurchflusses des Luftventils auch eine exakte Vorgabe der zugeführten Milchmenge möglich, insbesondere eine genauere Vorgabe verglichen mit der Zuführung von Milch mittels des Venturieffektes.

Insbesondere ist es vorteilhaft, dass die Steuervorrichtung mit der Pumpe verbunden und diese derart zusammenwirkend ausgeschaltet sind, dass die Fördermenge der Pumpe mittels der Steuervorrichtung steuerbar ist. Hierdurch kann somit einem gewünschten Schaumprodukt nicht nur ein exakter Luftdurchfluss des Luftventils, sondern zusätzlich auch eine exakte Zufuhr des flüssigen Lebensmittels, insbesondere auch einer variierende Fördermenge vorgegeben werden.

Untersuchungen der Anmelderin haben gezeigt, dass insbesondere die Verwendung einer Zahnradpumpe zur Förderung des flüssigen Lebensmittels vorteilhaft ist, da bei einer Zahnradpumpe in besonders verlässlicher Weise die Fördermenge steuerbar ist. Ebenso liegt die Verwendung anderer Pumpen im Rahmen der Erfindung, insbesondere haben sich auch Schwingankerpumpen als gut in der erfindungsgemäßen Vorrichtung einsetzbar erwiesen.

Vorzugsweise umfasst ein Aufschäummodus daher zusätzlich eine Aufschäumdauer für den gesamten Aufschäumvorgang, insbesondere zusätzlich eine Aufschäumdauer und mindestens eine Förderleistung der Pumpe.

Zur Erzeugung von Dampf umfasst die Vorrichtung vorzugsweise einen Dampfgenerator. Auch hier ist es besonders vorteilhaft, wenn der Dampfgenerator mit der Steuereinheit verbunden und derart zusammenwirkend mit dieser ausgestaltet ist, dass zumindest Start- und Endzeitpunkt der Dampfzugabe steuerbar ist. Insbesondere ist es vorteilhaft, dass die zugeführte Dampfmenge mittels der Steuereinheit steuerbar ist. Hierdurch sind somit sämtliche Parameter bei der Schaumherstellung bezüglich Fördermenge des flüssigen Lebensmittels, Dampfzufuhr und Luftzufuhr mittels der Steuereinheit vorgebbar und eine gewünschte Schaumqualität ist damit in hohem Maße reproduzierbar.

Vorzugsweise umfasst hierbei der Aufschäummodus zusätzlich eine Dampfmenge und/oder eine Zeitdauer für die Dampfzufuhr.

Vorzugsweise mündet die Dampfzuleitung unmittelbar in die Aufschäumkammer.

Das Luftventil ist vorzugsweise derart ausgeführt, dass der Luftdurchfluss des Luftventils durch elektrische Steuersignale steuerbar ist.

Vorzugsweise umfasst die Erfindungsgemäße Vorrichtung einen Kühlraum, zur Aufnahme und Kühlung des flüssigen Lebensmittels. Insbesondere ist es vorteilhaft, wenn die erfindungsgemäße Vorrichtung in eine an sich bekannte Kaffeemaschine, insbesondere einen Kaffeevollautomaten integriert ist.

Ebenso liegt die Ausführung der erfindungsgemäßen Vorrichtung als Beistellgerät für eine Kaffeemaschine im Rahmen der Erfindung. Hierbei ist es vorteilhaft, wenn die erfindungsgemäße Vorrichtung einen Steueranschluss zum Verbinden der Steuereinheit mit einer Steuereinheit der Kaffeemaschine umfasst und die Steuereinheit derart ausgebildet ist, dass abhängig von Steuersignalen der Kaffeemaschine eine den Steuersignalen entsprechende Schaumerzeugung erfolgt. In diesem Fall erfolgt die zentrale Steuerung somit ausgehend von der Kaffeemaschine, welche nach Bedarf (d.h. abhängig von dem durch die Kaffeemaschine erzeugten Getränk) Schaum in mittels Steuersignalen vorgebbarer Konsistenz anfordert. Vorzugsweise wird der Schaum über einen Auslass der Kaffeemaschine ausgegeben.

Die Erfindung umfasst weiterhin ein Verfahren zum Aufschäumen eines flüssigen Lebensmittels, insbesondere von Milch gemäß Anspruch 12. Hierbei werden das flüssige Lebensmittel, Dampf und Luft einer Aufschäumkammer zugeführt, wobei die Luft mittels des Venturieffektes aufgrund der Dampfströmung und/oder Lebensmittelströmung und/oder Strömung eines Dampf-Lebensmittelsgemisches zugeführt wird.

Wesentlich ist, dass mittels einer Steuereinheit ein intermittierendes Luftventil der Luftzuleitung zwischen mindestens einem Zustand mit hohem Luftdurchfluss und einem Zustand mit dem gegenüber geringerem Luftdurchfluss und/oder mit keinem Luftdurchfluss wiederholt umgeschaltet wird, zur Steuerung des mittleren Luftdurchflusses des Luftventils.

Die sich hieraus ergebenden Vorteile entsprechen dem zuvor Beschriebenen. Ebenso umfasst die Erfindung vorteilhafte Ausgestaltungen des erfindungsgemäßen Verfahrens gemäß der vorhergehend beschriebenen vorteilhaften Ausgestaltungen der erfindungsgemäßen Vorrichtung.

Insbesondere ist es vorteilhaft, dass bei dem erfindungsgemäßen Verfahren bei der Regelung des Luftventils mittels der Steuereinheit zwischen einem offenem und einem im wesentlichen geschlossenem Zustand hin wiederholt umgeschaltet wird, vorzugsweise durch Vorgabe einer Schaltfrequenz und/oder eines Tastverhältnisses zwischen offenem und geschlossenem Zustand des Luftventils.

Zur Erzeugung besonderer Schaumprodukte ist es insbesondere vorteilhaft, dass während eines Aufschäumvorgangs der Luftdurchfluss des Luftventils nach einem in der Steuereinheit vorgegebenem Verlauf verändert wird. Das flüssige Lebensmittel wird vorzugsweise mittels einer Pumpe zugeführt, insbesondere wird vorzugsweise die Fördergeschwindigkeit der Pumpe mittels der Steuereinheit vorgegeben.

Das erfindungsgemäße Verfahren wird vorzugsweise auf einer erfindungsgemäßen Vorrichtung oder einer vorteilhaften Ausgestaltung hiervon durchgeführt.

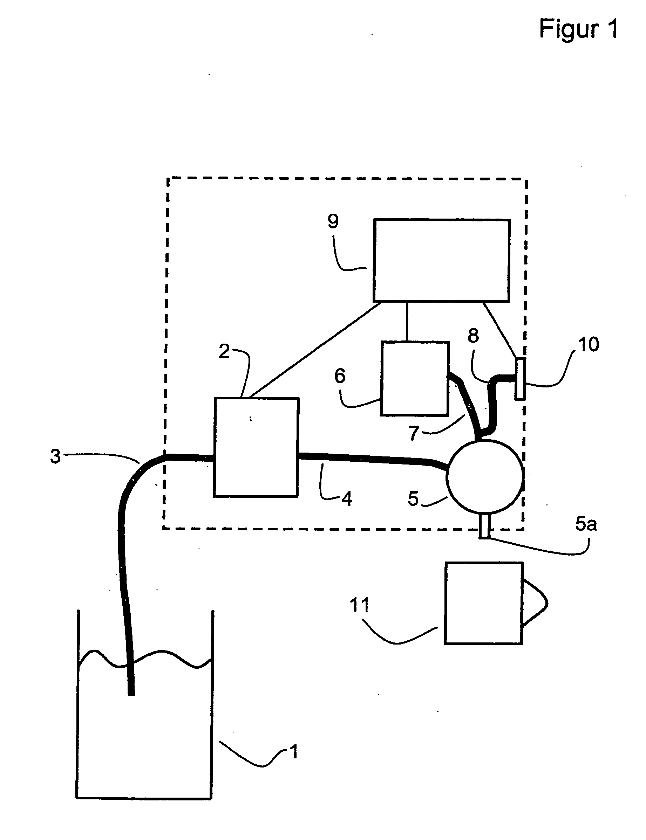

Weitere vorteilhaft Merkmale und vorteilhafte Ausgestaltungen der erfindungsgemäßen Vorrichtung und des erfindungsgemäßen Verfahrens werden im Folgenden anhand der Figur 1 beschrieben. In Figur 1 ist schematisch ein Ausführungsbeispiel einer erfindungsgemäßen Vorrichtung zum Aufschäumen eines flüssigen Lebensmittels dargestellt.

Aus einem Milchbehälter 1 wird mittels einer als Zahnradpumpe ausgeführten Pumpe 2 über eine Förderleitung 3 Milch gefördert. Die Pumpe 2 ist über eine Lebensmittelzuleitung 4 mit einer Aufschäumkammer 5 verbunden.

Die Vorrichtung weist weiterhin einen Dampfgenerator 6 auf, welcher über eine Dampfzuleitung 7 mit der Aufschäumkammer 5 verbunden ist. In die Dampfzuleitung 7 einmündend ist eine Luftzuleitung 8 angeordnet, wobei die Einmündung derart ausgeführt ist, dass aufgrund der Dampfströmung Luft mittels des Venturieffektes aus der Luftzuleitung angesaugt und in die Aufschäumkammer 5 eingeleitet wird.

Wesentlich ist, dass die Vorrichtung eine Steuereinheit 9 und die Luftzuleitung ein als Magnetventil ausgeführtes Luftventil 10 aufweist. Das in der Aufschäumkammer 5 erzeugte Schaumprodukt wird über einen Auslass 5a in ein Behältnis, wie beispielsweise eine Tasse 11 ausgegeben.

Die Steuereinheit 9 ist mit dem Luftventil 10, dem Dampfgenerator 6 und der Pumpe 2 verbunden, so dass mittels der Steuereinheit sowohl Fördermenge und Fördergeschwindigkeit des flüssigen Lebensmittels, sowie Dampfmenge und Dampffluss, als auch Luftmenge und Luftdurchfluss bei einem Aufschäumvorgang steuerbar sind.

Hierzu umfasst die Steuereinheit 9 eine Speichereinheit, in der mehrere Aufschäummodi gespeichert sind, die jeweils eine Pumpförderleistung, eine Vorgabe des Dampfstromes und eine Umschaltfrequenz sowie ein Tastverhältnis für das Luftventil 10 umfassen.

Über eine (nicht dargestellte) Bedieneinheit kann ein Benutzer ein gewünschtes Schaumprodukt auswählen. Die Steuereinheit 9 setzt entsprechend der Werte des zugeordneten Aufschäummodus Pumpe 2 und Dampfgenerator 6 in Gang und steuert diese entsprechend der vorgegebenen Werte. Wesentlich ist, dass zusätzlich anhand der vorgegebenen Umschaltfrequenz und dem vorgegebenen Tastverhältnis das als Magnetventil ausgeführt Luftventil 10 durch die Steuereinheit 9 gesteuert wird, so dass ein mittlerer Luftdurchfluss des Luftventils durch die Steuereinheit vorgegeben wird.

Die Luft wird hierbei wie bereits beschrieben aufgrund des Venturieffektes angesaugt, wobei die Luftzuleitung 8 einerseits mit der Dampfzuleitung 7 und andererseits mit dem Luftventil 10 fluidleitend verbunden ist und das Luftventil 10 gegenüber der umgebenden Atmosphäre geöffnet werden kann, so dass Luft aus dem Umgebungsbereich angesaugt wird.

In einem weiteren in der Speichereinheit der Steuereinheit 9 abgespeicherten Aufschäummodus sind zwei Wertepaare jeweils zur Steuerung der Pumpe, des Dampfgenerators und des Luftventils vorgegeben und für jedes Wertepaar ist zusätzlich eine Zeitdauer angegeben. Wählt der Benutzer diesen Aufschäummodus aus, so wird zunächst für die erste vorgegebene Zeitdauer eine Steuerung gemäß dem ersten Wertepaar und anschließend für die zweite vorgegebene Zeitdauer eine Steuerung gemäß des zweiten Wertepaares ausgeführt, so dass ein Schaumprodukt mit zwei Schichten mit unterschiedlicher Schaumart entsteht.

## Patentansprüche

1. Vorrichtung zum Aufschäumen eines flüssigen Lebensmittels, insbesondere von Milch,
umfassend
eine Aufschäumkammer (5), eine Lebensmittelzuleitung (4), eine Dampfzuleitung (7) und eine Luftzuleitung (8),
wobei Lebensmittel-, Dampf- und Luftzuleitung - gegebenenfalls über weitere Zuleitungen - mit der Aufschäumkammer (5) fluidleitend verbunden sind,
**dadurch gekennzeichnet,**
**dass** Vorrichtung eine Steuereinheit (9) und die Luftzuleitung (8) ein mittels der Steuereinheit (9) steuerbares Luftventil (10) umfasst und , das Luftventil (10) ein intermittierend betreibbares Luftventil ist, bei dem mittels der Steuereinheit (9) wahlweise mindestens ein Zustand mit hohem Luftdurchfluss und ein Zustand mit demgegenüber geringerem Luftdurchfluss und/oder mit keinem Luftdurchfluss vorgebbar ist und Steuereinheit (9) und Luftventil (10) derart zusammenwirkend ausgestaltet sind, dass der mittlere Luftdurchfluss des Luftventlis (10) durch wiederholtes Umschalten zwischen den mindestens zwei Zuständen des Luftventils (10) steuerbar ist.

2. Vorrichtung nach Anspruch 1,
**dadurch gekennzeichnet,**
**dass** das Luftventil (10) einen im wesentlichen geschlossenen und einen geöffneten Zustand aufweist und Steuereinheit (9) und Luftventil (10) derart ausgeführt sind, dass durch wiederholtes Umschalten zwischen geschlossenem und geöffnetem Zustand des Luftventils (10) der mittlere Luftdurchfluss des Luftventils (10) steuerbar ist, vorzugsweise ist das Luftventil (10) als Magnetventil ausgeführt.

3. Vorrichtung nach mindestens einem der vorangegangenen Ansprüche,
**dadurch gekennzeichnet,**
**dass** Steuereinheit (9) und Luftventil (10) derart zusammenwirkend ausgestaltet sind, dass der mittlere Luftdurchfluss des Luftventils (10) steuerbar ist durch Vorgabe einer Umschaltfrequenz, mit der zwischen den mindestens zwei Zuständen des Luftventils (10) umgeschaltet wird und/oder einem Tastverhältnis zwischen den mindestens zwei Zuständen.

4. Vorrichtung mindestens nach Anspruch 4,
**dadurch gekennzeichnet,**
**dass** Luftventil (10) und Steuereinheit (9) derart ausgeführt sind, dass mittels der Steuereinheit (9) eine Umschaltfrequenz im Bereich von 1 Hz bis 50 Hz, vorzugsweise 1 Hz bis 20 Hz, im Weiteren vorzugsweise im Bereich von 5 Hz bis 15 Hz, insbesondere eine Frequenz von etwa 10 Hz vorgebbar ist.

5. Vorrichtung nach Anspruch 2 und mindestens einem der Ansprüche 3 bis 4,
**dadurch gekennzeichnet,**
**dass** Luftventil (10) und Steuereinheit (9) derart ausgeführt sind, dass mittels der Steuereinheit (9) ein Tastverhältnis zwischen geöffnetem und geschlossenem Zustand des Luftventils (10) von DC 2 % bis OC 80 %, vorzugsweise von DC 5 % bis DC 60 % vorgebbar ist.

6. Vorrichtung nach mindestens einem der Ansprüche 3 bis 5,
**dadurch gekennzeichnet,**
**dass** die Steuereinheit (9) eine Speichereinheit zur Speicherung mindestens eines Aufschäummodus umfasst, wobei der Aufschäummodus eine Umschaltfrequenz und/oder ein Tastverhältnis umfasst.

7. Vorrichtung nach Anspruch 6,
**dadurch gekennzeichnet,**
**dass** mindestens einen Aufschäummodus zwei unterschiedliche Werte für die Umschaltfrequenz und/oder das Tastverhältnis umfasst, wobei jedem Wert bzw. jedem Wertepaar eine Zeitdauer zu dessen Anwendung zugeordnet ist.

8. Vorrichtung nach mindestens einem der vorangegangenen Ansprüche,
**dadurch gekennzeichnet,**
**dass** die Vorrichtung eine Pumpe (2) zum Fördern des flüssigen Lebensmittels umfasst, welche druckseitig fluidleitend mit der Lebensmittelzuleitung (4) verbunden ist, vorzugsweise,
**dass** die Steuervorrichtung mit der Pumpe (2) verbunden und diese derart zusammenwirkend ausgestaltet sind, dass die Fördermenge der Pumpe (2) mittels der Steuervorrichtung steuerbar ist, vorzugsweise, dass die Pumpe (2) eine Zahnradpumpe ist.

9. Vorrichtung nach Anspruch 8 und mindestens einem der Ansprüche 6 bis 7,
**dadurch gekennzeichnet,**
**dass** der Aufschäummodus zusätzlich eine Aufschäumdauer für den gesamten Aufschäumvorgang umfasst, vorzugsweise, dass der Aufschäummodus zusätzlich eine Aufschäumdauer und mindestens eine Förderleistung der Pumpe (2) umfasst.

10. Vorrichtung nach mindestens einem der vorangegangenen Ansprüche,
**dadurch gekennzeichnet,**
**dass** die Vorrichtung einen Dampfgenerator (6) umfasst, welcher mit der Steuereinheit (9) verbunden und derart zusammenwirkend mit dieser ausgestaltet ist, dass die zugeführte Dampfmenge mittels Steuereinheit (9) steuerbar ist.

11. Vorrichtung nach Anspruch 10 und mindestens einem der Ansprüche 6 bis 9,
**dadurch gekennzeichnet,**
**dass** der Aufschäummodus zusätzlich eine Dampfmenge und/oder eine Zeitdauer für die Dampfzufuhr umfasst.

12. Vorrichtung nach mindestens einem der vorangegangenen Ansprüche,
**dadurch gekennzeichnet,**
**dass** die Luffzuleitung derart ausgeführt und/oder angeordnet ist, dass mittels des Venturieffektes aufgrund der Dampfströmung und/oder Lebensmittelströmung und/oder Strömung eines Dampf-Lebensmittelgemisches Luft zuführbar ist.

13. Verfahren zum Aufschäumen eines flüssigen Lebensmittels, insbesondere von Milch,
wobei das flüssige Lebensmittel, Dampf und Luft einer Aufschäumkammer (5) zugeführt werden und
wobei die Luft über eine Luftzuleitung (8) zugeführt wird,
**dadurch gekennzeichnet,**
**dass** mittels einer Steuereinheit (9) ein intermittierendes Luftventil (10) der Luftzuleitung (8) zwischen mindestens einem Zustand mit hohem Luftdurchfluss und einem Zustand mit demgegenüber geringerem Luftdurchfluss und/oder mit keinem Luftdurchfluss wiederholt umgeschaltet wird, zur Steuerung des mittleren Luftdurchflusses des Luftventils (10).

14. Verfahren nach Anspruch 13,
**dadurch gekennzeichnet.**
**dass** bei der Regelung des Luftventils (10) mittels der Steuereinheit (9) zwischen einem offenen und einem im Wesentlichen geschlossenen Zustand wiederholt umgeschaltet wird, vorzugsweise,
**dass** mittels der Steuereinheit (9) eine Schaltfrequenz und/oder ein Tastverhältnis zwischen offenen und geschlossenen Zuständen vorgegeben wird.

15. Verfahren nach mindestens einem der Ansprüche 13 bis 14,
**dadurch gekennzeichnet,**
**dass** während eines Aufschäumvorgangs der Luftdurchfluss des Luftventils (10) nach einem in der Steuereinheit (9) vorgegebenen Verlauf verändert wird.

16. Verfahren nach mindestens einem der Ansprüche 13 bis 15,
**dadurch gekennzeichnet,**
**dass** das flüssige Lebensmittel mittels einer Pumpe (2) zugeführt wird, insbesondere, dass die Fördergeschwindigkeit der Pumpe (2) mittels der Steuereinheit (9) vorgegeben wird.

17. Verfahren nach mindestens einem der Ansprüche 13 bis 16,
**dadurch gekennzeichnet,**
**dass** das Verfahren auf einer Vorrichtung gemäß mindestens einem der Ansprüche 1 bis 11 durchgeführt wird.

## Claims

1. Device for foaming a liquid foodstuff, especially milk, comprising
a foaming chamber (5), a foodstuff supply line (4), a steam supply line (7) and an air supply line (8),
the foodstuff, steam and air supply lines being in fluid-conducting connection - optionally *via* further supply lines - with the foaming chamber (5),
**characterised in that**
the device comprises a control unit (9) and the air supply line (8) comprises an air valve (10), which is controllable by means of the control unit (9), and
the air valve (10) is an intermittently operable air valve for which, by means of the control unit (9), it is possible to specify selectively at least one state having a high through-flow of air and one state having a lower through-flow of air relative thereto and/or having no through-flow of air, and the control unit (9) and the air valve (10) are arranged to co-operate in such a way that the average flow of air through the air valve (10) is controllable by repeated switching-over between the at least two states of the air valve (10).

2. Device according to claim 1,
**characterised in that**
the air valve (10) has a substantially closed state and an opened state and the control unit (9) and the air valve (10) are arranged in such a way that the average flow of air through the air valve (10) is controllable by repeated switching-over between the closed and opened states of the air valve (10), the air valve (10) preferably being in the form of a solenoid valve.

3. Device according to at least one of the preceding claims,
**characterised in that**
the control unit (9) and the air valve (10) are arranged to co-operate in such a way that the average flow of air through the air valve (10) is controllable by specifying the switch-over frequency with which a switch-over is made between the at least two states of the air valve (10) and/or a pulse duty factor between the at least two states.

4. Device according to at least claim 3,
**characterised in that**
the air valve (10) and the control unit (9) are arranged in such a way that, by means of the control unit (9), a switch-over frequency in the range of from 1 Hz to 50 Hz, preferably from 1 Hz to 20 Hz, especially in the range of from 5 Hz to 15 Hz, more especially a frequency of about 10 Hz, is specifiable.

5. Device according to claim 2 and at least one of claims 3 and 4,
**characterised in that**
the air valve (10) and the control unit (9) are arranged in such a way that, by means of the control unit (9), a pulse duty factor between the opened and closed states of the air valve (10) of from DC 2 % to DC 80 %, preferably from DC 5 % to DC 60 %, is specifiable.

6. Device according to at least one of claims 3 to 5,
**characterised in that**
the control unit (9) comprises a memory unit for storing at least one foaming mode, the foaming mode comprising a switch-over frequency and/or a pulse duty factor.

7. Device according to claim 6,
**characterised in that**
at least one foaming mode comprises two different values for the switch-over frequency and/or the pulse duty factor, each value or each pair of values being assigned a time period for the application thereof.

8. Device according to at least one of the preceding claims,
**characterised in that**
the device comprises a pump (2) for feeding the liquid foodstuff, which pump is, on the pressure side, in fluid-conducting connection with the foodstuff supply line (4), preferably the control device is connected to the pump (2) and the latter are arranged to co-operate in such a way that the delivery volume of the pump (2) is controllable by means of the control device, preferably the pump (2) is a gear pump.

9. Device according to claim 8 and at least one of claims 6 and 7,
**characterised in that**
the foaming mode comprises, in addition, a foaming period for the entire foaming operation, preferably the foaming mode comprises, in addition, a foaming period and at least one delivery rate of the pump (2).

10. Device according to at least one of the preceding claims,
**characterised in that**
the device comprises a steam generator (6) which is connected to the control unit (9) and is arranged to co-operate therewith in such a way that the amount of steam supplied is controllable by means of the control unit (9).

11. Device according to claim 10 and at least one of claims 6 to 9,
**characterised in that**
the foaming mode comprises, in addition, an amount of steam and/or a time period for supplying steam.

12. Device according to at least one of the preceding claims,
**characterised in that**
the air supply line is constructed and/or arranged in such a way that air is suppliable by means of the Venturi effect resulting from the flow of steam and/or the flow of foodstuff and/or the flow of a steam/foodstuff mixture.

13. Method of foaming a liquid foodstuff, especially milk,
wherein the liquid foodstuff, steam and air are supplied to a foaming chamber (5), and
wherein the air is supplied by way of an air supply line (8), **characterised in that**
by means of a control unit (9) an intermittent air valve (10) of the air supply line (8) is repeatedly switched over between at least one state having a high through-flow of air and one state having a lower through-flow of air relative thereto and/or having no through-flow of air, to control the average flow of air through the air valve (10).

14. Method according to claim 13,
**characterised in that**
for regulation of the air valve (10), by means of the control unit (9) a switch-over is repeatedly made between an open state and a substantially closed state, preferably by means of the control unit (9) a switching frequency and/or a pulse duty factor between the open and closed states is specified.

15. Method according to at least one of claims 13 and 14,
**characterised in that**
during a foaming operation, the flow of air through the air valve (10) is changed in accordance with a regime specified in the control unit (9).

16. Method according to at least one of claims 13 to 15,
**characterised in that**
the liquid foodstuff is supplied by means of a pump (2), especially the delivery speed of the pump (2) is specified by means of the control unit (9).

17. Method according to at least one of claims 13 to 16,
**characterised in that**
the method is carried out on a device according to at least one of claims 1 to 11.

## Revendications

1. Dispositif de moussage d'un produit alimentaire liquide, en particulier de lait, comprenant une chambre de moussage (5), une conduite d'apport de produit alimentaire (4), une conduite d'apport de vapeur (7) et une conduite d'apport d'air (8), la conduite d'apport de produit alimentaire, la conduite d'apport de vapeur et la conduite d'apport d'air étant fluidiquement reliées à la chambre de moussage (5) - éventuellement par l'intermédiaire de conduites d'alimentation supplémentaires -,
**caractérisé en ce que** le dispositif comprend une unité de commande (9) et la conduite d'apport d'air (8) comprend une soupape d'air (10) pouvant être commandée au moyen de l'unité de commande (9), et la soupape d'air (10) est une soupape d'air à fonctionnement intermittent pour laquelle, au moyen de l'unité de commande (9), on peut prescrire au choix au moins un état avec un débit d'air élevé et un état avec un débit d'air plus faible et/ou sans débit d'air, et l'unité de commande (9) et la soupape d'air (10) sont conçues coopérantes de telle sorte que le débit d'air moyen de la soupape d'air (10) peut être commandé par la commutation répétée entre les au moins deux états de la soupape d'air (10).

2. Dispositif selon la revendication 1, **caractérisé en ce que** la soupape d'air (10) présente un état essentiellement fermé et un état ouvert, et l'unité de commande (9) et la soupape d'air (10) sont réalisées de telle sorte que le débit d'air moyen de la soupape d'air (10) peut être commandé par la commutation répétée entre l'état fermé et l'état ouvert de la soupape d'air (10), la soupape d'air (10) étant réalisée de préférence sous forme de soupape électromagnétique.

3. Dispositif selon l'une des revendications précédentes, **caractérisé en ce que** l'unité de commande (9) et la soupape d'air (10) sont conçues coopérantes de telle sorte que le débit d'air moyen de la soupape d'air (10) peut être commandé par la prescription d'une fréquence de commutation avec laquelle s'effectue la commutation entre les au moins deux états de la soupape d'air (10), et/ou d'un taux d'impulsions entre les au moins deux états.

4. Dispositif selon la revendication 3, **caractérisé en ce que** la soupape d'air (10) et l'unité de commande (9) sont réalisées de telle sorte qu'au moyen de l'unité de commande (9), on peut prescrire une fréquence de commutation dans la plage de 1 Hz à 50 Hz, de préférence de 1 Hz à 20 Hz, d'une manière encore plus préférée dans la plage de 5 Hz à 15 Hz, en particulier une fréquence d'environ 10 Hz.

5. Dispositif selon la revendication 2 et la revendication 3 ou 4, **caractérisé en ce que** la soupape d'air (10) et l'unité de commande (9) sont réalisées de telle sorte qu'au moyen de l'unité de commande (9), on peut prescrire un taux d'impulsions entre l'état ouvert et l'état fermé de la soupape d'air (10) de DC 2 % à DC 80 %, de préférence de DC 5 % à DC 60 %.

6. Dispositif selon l'une des revendications 3 à 5, **caractérisé en ce que** l'unité de commande (9) comprend une unité dé mémorisation pour mémoriser au moins un mode de moussage, le mode de moussage comprenant une fréquence de commutation et/ou un taux d'impulsions.

7. Dispositif selon la revendication 6, **caractérisé en ce qu'**au moins un mode de moussage comprend deux valeurs différentes pour la fréquence de commutation et/ou le taux d'impulsions, sachant qu'une durée pour leur utilisation est associée à chaque valeur ou chaque paire de valeurs.

8. Dispositif selon l'une des revendications précédentes, **caractérisé en ce que** le dispositif comprend une pompe (2) pour acheminer le produit alimentaire liquide, qui est fluidiquement reliée du côté de pression à la conduite d'apport de produit alimentaire (4),
de préférence **en ce que** le dispositif de commande est relié à la pompe (2), et ce dispositif et la pompe sont conçus coopérants de telle sorte que le débit de la pompe (2) peut être commandé au moyen du dispositif de commande, de préférence **en ce que** la pompe (2) est une pompe à engrenages.

9. Dispositif selon la revendication 8 et la revendication 6 ou 7, **caractérisé en ce que** le mode de moussage comprend en outre une durée de moussage pour la totalité de l'opération de moussage, de préférence **en ce que** le mode de moussage comprend en outre une durée de moussage et au moins une capacité de refoulement de la pompe (2).

10. Dispositif selon l'une des revendications précédentes, **caractérisé en ce que** le dispositif comprend un générateur de vapeur (6) qui est relié à l'unité de commande (9) et est conçu coopérant avec celle-ci de telle sorte que la quantité de vapeur apportée peut être commandée au moyen de l'unité de commande.

11. Dispositif selon la revendication 10 et l'une des revendications 6 à 9, **caractérisé en ce que** le mode de moussage comprend en outre une quantité de vapeur et/ou une durée pour l'apport de vapeur.

12. Dispositif selon l'une des revendications précédentes, **caractérisé en ce que** la conduite d'apport d'air est réalisée et/ou disposée de telle sorte que de l'air peut être apporté par l'effet Venturi du fait du flux de vapeur, du flux de produit alimentaire et/ou du flux d'un mélange de vapeur de et de produit alimentaire.

13. Procède de moussage d'un produit alimentaire liquide, en particulier de lait,
le produit alimentaire liquide, de la vapeur et de l'air étant apportés à une chambre de moussage (5) et l'air étant apporté au moyen d'une conduite d'apport d'air (8), **caractérisé en ce que**, au moyen d'une unité de commande (9), une soupape d'air intermittente (10) de la conduite d'apport d'air (8) est commutée de manière répétée entre au moins un état avec un débit d'air élevé et un état avec un débit d'air plus faible et/ou sans débit d'air, afin de commander le débit d'air moyen de la soupape d'air (10).

14. Procédé selon la revendication 13, **caractérisé en ce que**, pour la régulation de la soupape d'air (10) au moyen de l'unité de commande (9), on effectue une commutation répétée entre un état ouvert et un état essentiellement fermé, de préférence **en ce qu'**on prescrit au moyen de l'unité de commande (9) une fréquence de commutation et/ou un taux d'impulsions entre les états ouvert et fermé.

15. Procédé selon la revendication 13 ou 14, **caractérisé en ce que**, pendant une opération de moussage, le débit d'air de la soupape d'air (10) est modifié selon une allure prescrite dans l'unité de commande (9).

16. Procédé selon l'une des revendications 13 à 15, **caractérisé en ce que** le produit alimentaire liquide est apporté au moyen d'une pompe (2), de préférence **en ce que** la vitesse de refoulement de la pompe (2) est prescrite au moyen de l'unité de commande (9).

17. Procédé selon l'une des revendications 13 à 16, **caractérisé en ce que** le procédé est mis en oeuvre sur un dispositif selon l'une des revendications 1 à 11.
